# EUROPEAN PATENT APPLICATION

(11) **EP 0 913 249 A2**
(43) Date of publication of application: **06.05.1999**
(21) Application number: 98308982.2
(22) Date of filing: 03.11.1998
(51) Int. Cl.: B29C 71/00, B29D 30/06

(54) **Post-curing process during the vulcanization of pneumatic tyres**

(30) Priority: 03.11.1997 BR 9705407
(71) Applicant: Pirelli Pneus SA, Santo André, Sao Paulo (BR)
(72) Inventor: Pinheiro, Eduardo Goncalves, Maua,09371-470, Sao Paulo (BR)
(74) Representative: Abbie, Andrew Kenneth

(57) **Abstract**

The present invention relates to a post-curing process, in a thermally insulated and non-energized environment, for the vulcanization of pneumatic tyres, comprising removing the pneumatic tyres from its respective vulcanizer or vulcanization mould as soon as it reaches a consistency stage sufficient to keep the geometry thereof unchanged, and then transferring it to a confined environment where the post-curing step of the pneumatic tyre is carried out under conditions of controlled cooling in a thermally insulated environment devoid of any heating system.

The insulated environment in which cooling takes place, is called herein repository and is simple to make and install industrially, and it can be a rigid structure (figure 1) or a cover of non-rigid material of the blanket type with which the pneumatic tyre is coated (figure 2).

In this process, post-curing of the pneumatic tyre is effected under controlled cooling in a thermally insulated environment, so as to minimize the influence of environmental changes such as temperature and wind resulting in more homogeneous vulcanized products. Through this invention, it is possible to reduce the residence time of the pneumatic tyres within the vulcanizers, releasing them for new charges, and this means savings in energy, time and production volume.

## Description

The present invention relates to a post-curing process for the vulcanization of pneumatic tyres comprising removing the pneumatic tyre from its mould during the vulcanization period and then inserting it into a thermally insulated environment devoid of any heating system, wherein the pneumatic tyre remains during its cooling period, so as to complete its chemical reactions of vulcanization in such environment.

The vulcanization processes which are known to the state of art comprise two steps:
a) a heating step, during which the "raw" or non-vulcanized. pneumatic tyre is subjected to heat and pressure and is shaped in the mould. In this step, begin the crosslinking chemical reactions in the rubber compounds which are responsible for the initial transformation of the plastic structure of rubber into an elastic structure, thereby enabling the pneumatic tyre to exert its function;
b) a cooling step of the pneumatic tyre during which the latter will give off heat to the environment, but due to the quantity of heat stored in the first step, the chemical reactions continue despite cooling. Cooling in free air is a hardly controllable process because of the variations of room temperature and wind, causing undesirable variations from tyre to tyre.

The present invention consists in removing the pneumatic tyre from the mould during the heating step, as soon as the pneumatic tyre is able to keep its desired geometry and to complete the crosslinking reactions (vulcanization) and introducing it into a closed, thermally insulated environment devoid of any heating system, wherein the cooling step will take place.

The present invention is applied to any kind of pneumatic tyre, namely having a radial or diagonal structure and is also applied to pneumatic tyres of any size, that is to say, is applied both to the small tyres for bicycles, motorcycles, automobiles, vans, etc., and also to the large tyres for trucks, busses, tractors, earth-moving vehicles and so for.

In the present invention, there are several options of repositories as far as the insulated environment for confinement of the pneumatic tyre during the cooling step, is concerned.

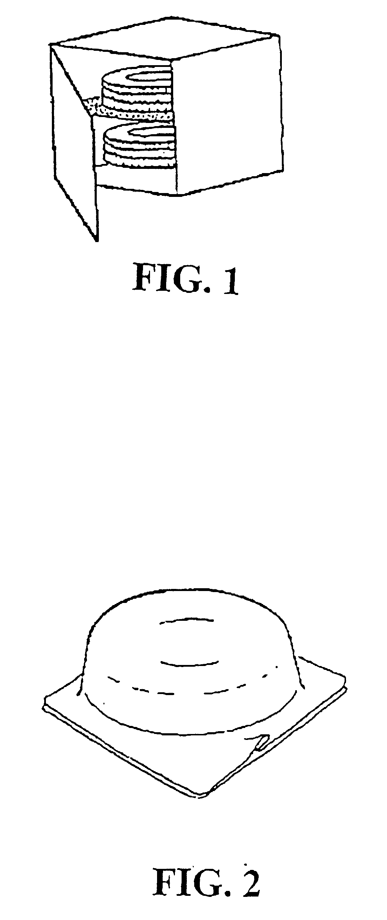

Illustratively, figure 1 depicts a repository with a box-type rigid structure. This kind of solution can be constructed so as to accommodate one or more pneumatic tyres simultaneously, as determined by production factors such as produced amount and available physical space. This repository should have, in at least one of its walls, a door for the pneumatic tyres which will remain there to enter and exit.

In the construction of this kind of repository, several types of materials can be utilized such as metals, woods, resin-coated glass fibers, plastic and others provided that, besides providing the strength necessary to keep the structure as non-deformable, they are also thermally resistant to contact with pneumatic tyres which, upon exiting the vulcanizer, are at temperatures in the range from 140°C to 200°C.

The geometry of this type of repository can be the most convenient possible: so, in addition to the hexahedral shape shown in figure 1, cylindrical, frustoconical and others including non-regular shapes are also admitted.

illustratively, figure 2 depicts a repository with non-rigid structure made of malleable material of the cover or blanket type.

In the construction of this type of repository, several kinds of materials can also be used such as synthetic or natural fabrics, sheets of polymers such as rubbers and plastics, and the like, In this type of solution, the concern of physical strength is only restricted to the durability of the repository itself, but there still remains the requirement of being thermally resistant to the contact with pneumatic tyres which, upon exiting the vulcanizer, are at the above mentioned temperatures.

This type of repository can be constructed as a single piece into which the pneumatic tyre is inserted or as several pieces which together will surround entirely the pneumatic tyre.

All these repositories (whether or not of rigid structure) for pneumatic tyres in post-curing processing can be given an inner or outer coating modifying the thermal conductivity properties of the walls, so as to render the repository more efficient as a thermal insulator. On the other hand, they also can be given a coating improving their resistance to heat and to chemical agents such as released from the pneumatic tyres.

This process allows for a greater retention of the heat supplied to the pneumatic tyre during the heating step, thus making the drops in the internal temperatures of the pneumatic tyre, a slower procedure than cooling in free air.

This process enables significant reductions in the time necessary for the residence of the pneumatic tyre within a vulcanizer, and consequently permits reductions in power consumption.

This process enables a vulcanization with higher degree of thermal homogeneity since it reduces the excess of vulcanization of the external parts of the pneumatic tyre, which are closer to the heat sources in a vulcanizer.

This process enables a better control of the cooling conditions by minimizing the environmental changes such as temperature and wind reducing consequently the variability from tyre to tyre.

As seen from the foregoing explanations, the instant post-curing process is distinguished from the state of art by a special time and energy saving as compared to the conventional vulcanization process in which the pneumatic tyre, after a long period in a heating step within its vulcanizer, looses rapidly, during the cooling step. its stored heat to an open environment which is not thermally insulated and is vulnerable to environmental changes.

The subject process is also distinguished in particular from another invention of the same Applicant as for this case, filed as BR PI9104717-0, wherein post-curing of the pneumatic tyre withdrawn from the vulcanization mould is effected by immersion in heated fluids; As seen from the foregoing description, the present invention is novel over said previous invention of the same Applicant, by saving thermal energy since in the present process, the environment where post-curing is carried out is devoid of external heating system (electrical, steam, gas...). It also differs in the complexity of the repositories since, as it does not require an external heating system, the present process uses structures which are more simple and economical as well as less complex industrial plants.

## Claims

1. Post-curing process, in a thermally insulated and non-energized environment, for the vulcanization of pneumatic tyres, characterized by the fact of comprising removing the pneumatic tyre from its respective vulcanizer, and then it follows immediately a step of cooling the pneumatic tyre in an thermally insulated environment, providing a better energy yield, a better control of heat transfer from the pneumatic tyre to the external environment as well as reducing influence of environmental factors such as temperature and wind on the cooling of the pneumatic tyre.

2. Post-curing process, in a thermally insulated and non-energized environment, for the vulcanization of pneumatic tyres, in accordance with claim 1, characterized by the fact of comprising utilizing repositories for cooling the pneumatic tyres performing the function of thermal insulators so that heat stored in the pneumatic tyres during the step of residence in vulcanizers remains for a longer time within these pneumatic tyres.

3. Post-curing process, in a thermally insulated and non-energized environment, for the vulcanization of pneumatic tyres, in accordance with claims 1 and 2, characterized by the fact of comprising utilizing repositories for cooling the pneumatic tyres devoid of any heating system for the insulated environment both inside said environment and in the surfaces thereof.

4. Post-curing process, in a thermally insulated and non-energized environment, for the vulcanization of pneumatic tyres, in accordance with claims 1, 2 and 3, characterized by the fact of the cooling repository is made of rigid structure (figure 1) such as, for instance metal, wood or resin-coated glass fibre which can have or not in the inside or outside thereof, an additional material which is thermal insulator or furthermore a coating improving the resistance to heat and chemical agents released from the pneumatic tyres.

5. Post-curing process, in a thermally insulated and non-energized environment, for the vulcanization of pneumatic tyres, in accordance with claims 1, 2 and 3, characterized by the fact of the cooling repository is made of non-rigid malleable structure (figure 2) such as, for instance, natural or synthetic fabric, polymeric materials such as rubber or plastic, which can have or not in the inside or outside thereof, an additional material which is thermal insulator or furthermore a coating improving the resistance to heat and chemical agents released from the pneumatic tyres.

6. A tyre vulcanization process comprising subjecting a non-vulcanized item to heat and pressure in a mould to initiate crosslinking, removing the item from the mould and cooling the same in a closed, thermally insulated environment crosslinking continuing during a first part of said cooling step.

7. A process as claimed in claim 6, wherein said item is removed from said mould substantially as soon as the item is able to retain its desired geometry.
